# EUROPEAN PATENT APPLICATION

(11) **EP 0 884 331 A2**
(43) Date of publication of application: **16.12.1998**
(21) Application number: 98110645.3
(22) Date of filing: 10.06.1998
(51) Int. Cl.: C08F 4/70, C08F 10/02

(54) **Polymerization catalysts and processes**

(30) Priority: 12.06.1997 US 873362
(71) Applicant: PHILLIPS PETROLEUM COMPANY, Bartlesville Oklahoma (US)
(72) Inventor: Eilerts, Nancy W., Bartlesville, Oklahoma 74006 (US); Guatney, Lloyd Wayne, Bartlesville, Oklahoma 74003 (US); McDaniel, Max Paul, Bartlesville, Oklahoma 74006 (US); Hsieh, Eric Tsu-Yin, Bartlesville, Oklahoma 74006 (US); Byers, Jim Don, Bartlesville, Oklahoma 74006 (US)
(74) Representative: Dost, Wolfgang, Dr. rer.nat., Dipl.-Chem.

(57) **Abstract**

Novel catalyst systems which comprise diimine nickel dihalide complexes can be used with methylaluminoxane in slurry polymerization processes to polymerize ethylene and, optionally a higher alpha-olefin comonomer, to produce high molecular weight polymers.

## Description

### BACKGROUND

This invention relates to homopolymerization of mono-1-olefin monomers, such as ethylene, and copolymerization of a mono-1-olefin monomer, such as ethylene, with at least one higher alpha-olefin comonomer.

It is well known that mono-1-olefins, such as ethylene, can be polymerized with catalyst systems employing transition metals such as titanium, vanadium, chromium, nickel and/or other metals, either unsupported or on a support such as alumina, silica, titania, and other refractory metals. Supported polymerization catalyst systems are frequently used with a cocatalyst, such as alkyl boron and/or alkyl aluminum compounds. Organometallic catalyst systems, i.e., Ziegler-Natta-type catalyst systems usually are unsupported and frequently are used with a cocatalyst, such as methylaluminoxane.

It is also well-known that, while no polymer production process is easy, slurry, or loop, polymerization processes are relatively much more commercially desirable than other polymerization processes. Furthermore, the type of polymerization process used can have effect the resultant polymer. For example, higher reactor temperatures can result in low catalyst activity ad productivity, as well as a lower molecular weight polymer product. Higher reactor pressures also can decrease the amount of desirable branching in the resultant polymer.

Most polymer products made in slurry processes, especially those polymer products made using supported chromium catalyst systems, have a broader molecular weight distribution and, therefore, the polymer product is much easier to process into a final product. Polymers made by other processes, such as, for example, higher temperature and/or pressure solution processes, can produce polymers having a narrow molecular weight distribution; these polymers can be much more difficult to process into an article of manufacture.

Unfortunately, many homogeneous organometallic catalyst systems have low activity, high consumption of very costly cocatalysts, like methylaluminoxane (MAO), and can produce low molecular weight polymers with a narrow molecular weight distribution. Furthermore, even though MAO can be necessary to produce a polymer with desired characteristics, an excess of MAO can result in decreased catalyst system activity. Additionally, these types of homogeneous catalyst systems preferably are used only in solution or gas phase polymerization processes.

### SUMMARY OF THE INVENTION

It is an object of this invention to provide novel catalyst systems useful for polymerization.

It is another object of this invention to provide an improved polymerization process.

It is still another object of this invention to provide catalyst systems which are relatively simple to make, have increased activity and increased productivity.

It is a further object of this invention to provide catalyst systems which have reduced cocatalyst consumption.

It is yet another object of this invention to provide homopolymers of ethylene and copolymers of ethylene and higher alpha-olefin that can be easily processed, as indicated by increased branching and a broad molecular weight distribution.

It is still another object of this invention to provide homopolymers of ethylene and copolymers of ethylene and higher alpha-olefin that have an increased molecular weight.

In accordance with this invention catalyst systems that are useful for polymerizing olefins and processes to make such catalyst systems are provided, wherein said catalyst system comprises diimine nickel dihalide complexes and methylaluminoxane.

In accordance with another embodiment of this invention, slurry polymerization processes comprising contacting in a reaction zone ethylene, and optionally one or more higher alpha-olefins, with a catalyst system comprising diimine nickel dihalide complexes in the presence of methylaluminoxane are provided.

In accordance with yet another embodiment of this invention, homopolymers of ethylene and copolymers of ethylene and higher alpha-olefins which can be characterized as having high molecular weight, branching and a broad molecular weight distribution, are provided.

### DESCRIPTION OF THE PREFERRED EMBODIMENTS

### Catalyst Systems

Catalysts of this invention can be characterized as diimine nickel dihalide complexes having a general formula as shown below in Compound I.

### Compound I

wherein 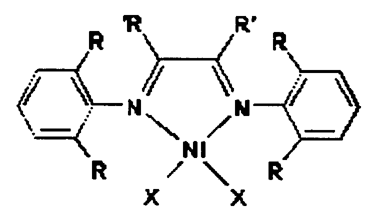
X is a halogen;
R can be the same or different and is selected from the group consisting of branched and/or linear alkyl or aromatic groups having from about 1 to about 8 carbon atoms per alkyl group; and
R 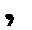 can be the same or different and is selected from the group consisting of hydrogen and linear, branched, cyclic, bridging, aromatic, and/or aliphatic hydrocarbons, having from about 1 to about 70 carbon atoms per radical group.

The halogen of the diimine nickel dihalide complex is selected from the group consisting of fluorine, chlorine, bromine, iodine, and mixtures thereof. Preferably, the halogen is selected from the group consisting of chlorine and/or bromine for high catalyst activity and productivity. Most preferably, the halide is bromine for best catalyst system activity and productivity.

R substituents on the aromatic rings of the diimine nickel dihalide complex can be the same or different, and are selected from the group consisting of branched or linear, aliphatic or aromatic groups having from about 1 to about 8 carbon atoms per alkyl group. Although hydrogen can be used, hydrogen can inhibit synthesis of the ligand. R groups having more than about 8 carbon atoms per group can result in a catalyst system with lower activity and/or productivity. While not wishing to be bound by theory, it is believed that larger substituent groups can cause steric hindrance in the catalyst system, thereby which can decrease catalyst system activity and/or productivity. Exemplary alkyl substituents are selected from the group consisting of methyl, ethyl, propyl, isopropyl, butyl, isobutyl, tert-butyl, phenyl groups, and mixtures of two or more thereof. Preferably, the R substituent is an electron-donating species, selected from the group consisting of linear or branched aliphatic groups having from about 1 to about 5 carbon atoms per group. Most preferably, the R groups are both the same and are selected from the group consisting of methyl and isopropyl, due to commercial availability and ease of synthesis of the ligand.

The R group can be in any position, i.e., from 2 to 6, on the aromatic ring. Preferably, the R group, which can be the same or different, is either in the 2 and/or 6 position, due to ease of synthesis. Most preferably, for best catalytic activity and productivity, both R groups are the same and are in the 2 and 6 positions on the aromatic ring.

R 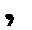 substituents can be the same or different and is selected from the group consisting of hydrogen and branched, linear, cyclic, aromatic or aliphatic radicals having from about 1 to about 70 carbon atoms per radical. Further, the R 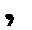 substituents can be linked, or joined, across the carbon-carbon bridge between the two nitrogen atoms. While not wishing to be bound by theory, it is believed that radicals having more than 70 carbon atoms can add to the steric hindrance of the catalyst systems and hinder catalyst activity and productivity. Preferably, the R 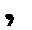 substituent group is selected from the group consisting of hydrogen and branched, linear, cyclic, aromatic or aliphatic radicals having from about 1 to about 20 carbon atoms per radical, due to commercial availability and ease of synthesis of the ligand. Most preferably, the R 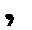 substituent groups are the same or a link across the carbon-carbon bridge between the nitrogen atoms, and the R 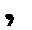 substituent is selected from the group consisting of hydrogen and branched, linear, cyclic, aromatic or aliphatic radicals having from about 1 to about 12 carbon atoms per radical, for the reasons given above. Exemplary R 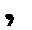 substituents include, but are not limited to, hydrogen, methyl, ethyl, propyl, phenyl, taken together acenaphthyl or cyclobutadienyl. Preferably, the R 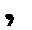 substituents are identical and are selected from the group consisting of hydrogen, methyl and acenaphthyl for best resultant catalyst system activity and productivity.

Novel catalyst systems disclosed in this application can be prepared in accordance with any manner known in the art. In general, diimine ligands are contacted with a nickel halide to form diimine nickel dihalide complexes. Usually, for ease of catalyst system preparation, the diimine ligand is prepared first. The catalyst preparation procedure can vary, depending on the substituents on the diimine ligand. For example, to prepare a specific diimine ligand, wherein R' is hydrogen, a three-component mixture is prepared. A two-fold molar excess of aniline, containing the desired R substituents (RₙC₆H₍₇₋ₙ₎N, wherein n = 1,2), is contacted with a dialdehyde, such as, for example, glyoxal (CHOCHO), in the presence of a compound capable of being a solvent for both organic and aqueous compounds. Exemplary solvents for both organic and aqueous compounds include, but are not limited to, methanol, ethanol and/or tetrahydrofuran (THF). The mixture can be contacted, preferably refluxed, under any atmosphere to form the desired ligand. Preferably, the mixture is refluxed for at least 10, preferably 20 minutes, cooled and the desired ligand can be recovered. Generally, after refluxing and cooling, the ligand can be recovered in a crystalline form.

To prepare another specific diimine ligand wherein the R' group is anything other than hydrogen, a similar procedure can be used. For example, at least a two-fold molar excess of aniline or a substituted aniline can be combined with a compound capable of dissolving both organic and aqueous compounds and a very minor amount of formic acid. Then, about a one molar equivalent of an alpha-diketone (R 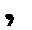 COCOR 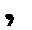 ) can be added to the mixture. The mixture can be stirred, under atmospheric conditions of temperature and pressure until the reaction is complete and the desired ligand is formed. Preferably, water is absent from the reaction mixture. Generally, the reaction will be complete in about 18, preferably 24 hours. A crystalline ligand product can be recovered according to any method known in the art.

The diimine nickel dihalide catalyst system complex can be prepared, again by any method known in the art. For example, approximate molar equivalents of a diimine ligand and a nickel dihalide can be contacted in the presence of any compound that can dissolve both the diimine ligand and nickel dihalide, either partially or completely. The contacting conditions can be any conditions suitable to effect the formation of a diimine nickel dihalide. Preferably, for best product results, the diimine ligand/nickel dihalide mixture is contacted at room temperature under a dry atmosphere for any amount of time sufficient to form the diimine nickel dihalide compound. Completion of the formation of the diimine nickel dihalide complex can be evidenced by a color change. Generally, contacting times of about 8, and preferably 12 hours are sufficient. Usually, as a result of the preparation procedure, the resultant diimine nickel halide will comprise from about 3 to about 20, preferably from about 5 to about 15, weight percent nickel, based on the total mass of the diimine nickel dihalide. The presence of oxygen is not thought to be detrimental to this aspect of the preparation procedure.

After formation of a diimine nickel dihalide, the diimine nickel dihalide can be recovered by any method known in the art, such as, for example evaporation and/or vacuum filtration of the solvent. Further, if desired, the diimine nickel dihalide can be further purified by washing. One exemplary wash compound can be heptane. The diimine nickel dihalide catalyst system can be recovered and used as a solid, heterogeneous catalyst system.

### Reactants Polymerization and Polymer Products

Polymers produced according to the process of this invention can be homopolymers of ethylene or copolymers of ethylene and a higher alpha-olefin. If the reaction product is a copolymer, ethylene can be polymerized with a comonomer which is a higher alpha-olefin having from 3 to about 8 carbon atoms per molecule. Exemplary comonomers include, but are not limited to, propylene, 1-butene, 1-pentene, 1-hexene, 1-octene, 4-methyl-1-pentene, and mixtures thereof. Preferably, the comonomer is 1-hexene and/or 4-methyl-1-pentene, in order to achieve maximum polymer product toughness.

If a comonomer is used, the comonomer can be added to the polymerization reactor, or reaction zone, in an amount within a range of about 1 to about 20 weight percent, preferably within 7 to about 18 weight percent, based on the weight of the ethylene monomer. Most preferably, a copolymer is present near the reaction zone within a range of about 10 to about 16 weight percent, in order to produce a polymer having the most desired physical properties.

Polymerization of the monomer and comonomer must be carried out under slurry, also known as loop/slurry or particle form, polymerization conditions wherein the temperature is kept below the temperature at which polymer swells significantly. Slurry polymerization processes are much easier to operate and maintain than other polymerization processes; a polymer product produced by a slurry process can be recovered much more easily. Such polymerization techniques are well-known in the art and are disclosed, for instance, in Norwood, U.S. Pat. No. 3,248,179, the disclosure of which is hereby incorporated by reference.

The slurry process generally is carried out in an inert diluent (medium), such as, for example, a paraffin, cycloparaffin, and/or aromatic hydrocarbon. Preferably, the inert diluent is an alkane having less that about 12 carbon atoms per molecule, for best reactor operation and polymer product. Exemplary diluents include, but are not limited to propane, n-butane, isobutane, n-pentane, 2-methylbutane (isopentane), and mixtures thereof. Isobutane is the most preferred diluent due to low cost and ease of use.

The temperature of the polymerization reactor, or reaction zone, when using isobutane as the reactor diluent, according to this invention, is critical and must be kept within a range of about 10° to about 90°C (50° - 200°F) and preferably within a range of about 10° to about 38°C (50° - 100° F). Most preferably, the reaction zone temperature is within a range of 21° to 32°C (70° - 90°F) for best catalyst activity and productivity. Reaction temperatures below about 10°C can be ineffective for polymerization.

Pressures in the slurry process can vary from about 100 to about 1000 psia (0.76 - 7.6 MPa), preferably from about 200 to about 700 psia. Most preferably, the reaction zone is maintained at a pressure within a range of 300 to 600 psia for best reactor operating parameters and best resultant polymer product. The catalyst system is kept in suspension and is contacted with the monomer and comonomer(s) at sufficient pressure to maintain the medium and at least a portion of the monomer and comonomer(s) in the liquid phase. The medium and temperature are thus selected such that the polymer or copolymer is produced as solid particles and is recovered in that form. Catalyst system concentrations in the reactor can be such that the catalyst system content ranges from 0.001 to about 1 weight percent based on the weight of the reactor contents.

The catalyst system and methylaluminoxane (MAO) can be added to the reactor in any order to effect polymerization. For example, catalyst system can be added, then some reactor diluent, such as isobutane, followed by MAO, then more diluent and finally, ethylene. However, as stated earlier, this addition order can be varied, depending on equipment availability and/or desired polymer product properties. Preferably, the catalyst system and MAO are not precontacted prior to addition to the polymerization reactor due to a possible decrease in catalyst activity.

The amount of catalyst system and MAO added to the reactor can vary. Generally, a molar excess of MAO is present, relative to the nickel compound. Preferably, the aluminum to nickel (Al:Ni) molar ratio is less than about 750:1, more preferably within a range of about 50:1 to about 600:1. Most preferably, the molar ratio of aluminum to nickel is within a ratio of 100:1 to 300:1 for best catalyst system activity and productivity.

Two preferred polymerization methods for the slurry process are those employing a loop reactor of the type disclosed in Norwood and those utilizing a plurality of stirred reactors either in series, parallel or combinations thereof wherein the reaction conditions can be the same or different in the different reactors. For instance, in a series of reactors, a chromium catalyst system which has not been subjected to the reduction step can be utilized either before or after the reactor utilizing the catalyst system of this invention.

Polymers produced in accordance with this invention generally have a relatively narrow heterogeneity index (HI), which is a ratio of the weight average molecular weight (M_{w}) and the number average molecular weight (Mₙ) (also expressed as M_{w}/Mₙ). Polymers produced in accordance with this invention usually have a HI within a range of about 2 to about 10 and preferably within a range of about 2 to about 8. Most preferably, as an indicator of good and easy processability, polymers produced in accordance with this invention have a HI within a range of 4.5 to 8.

Copolymers produced in accordance with this invention comprise a significant amount of short chain branching. This short chain branching is evidence that comonomers are incorporated into the polymer. Usually, copolymers produced in accordance with this invention comprise up to about 200, and generally from about 100 to about 200, short chain branches per 10,000 backbone carbon atoms of the polymer.

A further understanding of the invention and its advantages is provided by the following examples.

### EXAMPLES

The following Examples illustrate various aspects of the invention. Data are included for each example about the polymerization conditions, as well as the resultant polymer. All chemical handling, including reactions, preparation and storage, was performed under a dry, inert atmosphere (usually nitrogen). Unless otherwise indicated, bench scale polymerizations were completed in a 2.6 liter autoclave reactor at the desired temperature using an isobutane (1.2 liter) slurry. The reactor was heated to 120°C and purged with nitrogen for about 20 minutes. The reactor then was cooled to the desired polymerization temperature and pressurized with isobutane to about 400 psig. A known quantity (mass) of diimine nickel halide complex catalyst was charged to the reactor against a counter current of isobutane and the agitator was set at 490 rpm. If hydrogen was charged to the reactor, hydrogen addition was followed by isobutane. The desired quantity of methylaluminoxane (MAO) (10 weight % in toluene) was charged directly to the reactor via syringe. After the full volume of isobutane was added, ethylene was added to bring the total reactor pressure to 550 psig. Ethylene was fed on demand and the polymerization reaction terminated when ethylene flow into the reactor ceased.

Various catalyst diimine nickel halide catalyst systems were prepared and used to polymerize ethylene in the following examples. The abbreviation for each of the catalyst systems used is as follows:
[(iPr₂Ph)₂DABMe₂]NiCl₂ -
   N,N 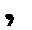 -bis(2,6-diisopropylphenyl)-2,3-butanediimine nickel(II) chloride.
[(iPr₂Ph)₂DABH₂]NiBr₂ -
   N,N 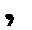 -bis(2,6-diisopropylphenyl)ethylenediimine nickel(II) bromide.
[(iPr₂Ph)₂DABMe₂]NiCl₂ -
   N,N 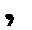 -bis(2,6-diisopropylphenyl)-2,3-butanediimine nickel(II) chloride.
[(iPr₂Ph)₂DABH₂]NiBr₂ -
   N,N 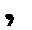 -bis(2,6-diisopropylphenyl)ethylenediimine nickel(II) bromide.
[(Me₂Ph)₂DABMe2]NiCl₂ -
   N,N 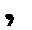 -bis(2,6-dimethylphenyl)-2,3-butanediimine nickel(II) chloride.
[(Me₂Ph)₂DABH₂]NiBr₂ -
   N,N 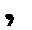 -bis(2,6-dimethylphenyl)ethylenediimine nickel(II) bromide.
[(Me₂Ph)₂DABMe₂]NiBr₂ -
   N,N 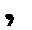 -bis(2,6-dimethylphenyl)-2,3-butanediimine nickel(II) bromide.
[(iPr₂Ph)₂DABMe₂]NiBr₂ -
   N,N 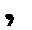 -bis(2,6-diisopropylphenyl)-2,3-butanediimine nickel(II) bromide.
[(Me₂Ph)₂DABMe₂]NiBr₂ -
   N,N 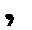 -bis(2,6-dimethylphenyl)-2,3-butanediimine nickel(II) bromide.
[(iPr₂Ph)₂DABAn]NiCl₂ -
   N,N 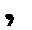 -bis(2,6-diisopropylphenyl)acenaphthylenediimine nickel(II) chloride.
[(iPr₂Ph)₂DABAn]NiBr₂ -
   N,N 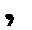 -bis(2,6-diisopropylphenyl)acenaphthylenediimine nickel(II) bromide.
[(iPr₂Ph)₂DABMe₂]NiBr₂ -
   N,N 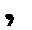 -bis(2,6-diisopropylphenyl)-2,3-butanediimine nickel(II) bromide.
[(Me₂Ph)₂DABH₂]NiCl₂ -
   N,N 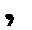 -bis(2,6-dimethylphenyl)ethylenediimine nickel(II) chloride.
[(Me₂Ph)₂DABH₂]NiBr₂ -
   N,N 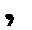 -bis(2,6-dimethylphenyl)ethylenediimine nickel(II) bromide.
[(Me₂Ph)₂DABH₂]NiCl₂ -
   N,N 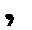 -bis(2,6-dimethylphenyl)ethylenediimine nickel(II) chloride.
[(Me₂Ph)₂DABMe₂]NiCl₂ -
   N,N 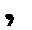 -bis(2,6-dimethylphenyl)-2,3-butanediimine nickel(II) chloride.
[(iPr₂Ph)₂DABAn]NiBr₂ -
   N,N 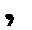 -bis(2,6-diisopropylphenyl)acenaphthylenediimine nickel(II) bromide.
[(Me₂Ph)₂DABH₂]NiCl₂ -
   N,N 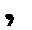 -bis(2,6-dimethylphenyl)ethylenediimine nickel(II) chloride.
[(Me₂Ph)₂DABH₂]NiCl₂ -
   N,N 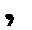 -bis(2,6-dimethylphenyl)ethylenediimine nickel(II) chloride.
[(Me₂Ph)₂DABH₂]NiBr₂ -
   N,N 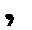 -bis(2,6-dimethylphenyl)ethylenediimine nickel(II) bromide.
[(iPr₂Ph)₂DABAn]NiCl₂ -
   N,N 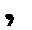 -bis(2,6-diisopropylphenyl)acenaphthylenediimine nickel(II) chloride.
[(Me₂Ph)₂DABH₂]NiCl₂ -
   N,N 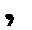 -bis(2,6-dimethylphenyl)ethylenediimine nickel(II) chloride.
[(iPr₂Ph)₂DABMe₂]NiCl₂ -
   N,N 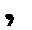 -bis(2,6-diisopropylphenyl)-2,3-butanediimine nickel(II) chloride.
[(Me₂Ph)₂DABH₂]NiCl₂ -
   N,N 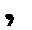 -bis(2,6-dimethylphenyl)ethylenediimine nickel(II) chloride.

In general, catalyst systems used for polymerization in the Examples were prepared as described in this application.

Polymer density was determined in grams per cubic centimeter (g/cc) on a compression molded sample, cooled at about 15°C per hour, and conditioned for about 40 hours at room temperature in accordance with ASTM D1505 and ASTM D1928, procedure C. High load melt index (HLMI, g/10 mins) was determined in accordance with ASTM D1238 at 190°C with a 21,600 gram weight. Melt index (MI, g/10 mins) was determined in accordance with ASTM D1238 at 190°C with a 2,160 gram weight. Size exclusion chromatography (SEC) analyses were performed at 140°C on a Waters, model 150 GPC with a refractive index detector. A solution concentration of 0.17 to 0.65 weight percent in 1,2,4-trichlorobenzene was found to give reasonable elution times.

### Example 1

This example shows that high catalyst system activity and productivity can be maintained at commercial reactor temperatures and at low levels of MAO, based on the amount of nickel in the catalyst system.

Polymerizations in the following Runs were carried out as described above, with a reactor pressure of 550 psig ethylene in isobutane slurry. MAO was added in a 10% wt/wt solution in toluene. 5 ml of MAO was added in each Run, unless stated otherwise. Polymerization results are listed below in Table 1.

**TABLE 1**

| Run Number | Catalyst | Catalyst Charged (g) | Al:Ni (Molar) | Reactor Temp © | Run Time (Min) | Activity (g pol/g Ni) |
|---|---|---|---|---|---|---|
| 101 | [(iPr2Ph)2DABMe2]NiCl2 | 0.0185 | 246 | 60 | 17 | 521002 |
| 102 | [(iPr2Ph)2DABH2]NiBr2 | 0.0183 | 277 | 60 | 8 | 38100 |
| 103 | [(iPr2Ph)2DABH2]NiBr2 | 0.0203 | 249 | 80 | 6 | 20600 |
| 104 | [(iPr2Ph)2DABMe2]NiCl2 | 0.0202 | 225 | 60 | 8 | 17100 |
| 105 | [(iPr2Ph)2DABH2]NiBr2 | 0.0184 | 275 | 80 | 3 | 14700 |
| 106 | [(Me2Ph)2DABMe2]NiCl2 | 0.0328 | 109 | 60 | 5 | 13100 |
| 107 | [(Me2Ph)2DABH2]NiBr2 | 0.0312 | 132 | 60 | 10 | 12600 |
| 108 | [(Me2Ph)2DABMe2]NiBr2 | 0.0283 | 154 | 60 | 10 | 10400 |
| 109 | [(iPr2Ph)2DABMe2]NiBr2 | 0.0188 | 282 | 60 | 15 | 10200 |
| 110 | [(Me2Ph)2DABMe2]NiBr2 | 0.0263 | 165 | 80 | 10 | 9900 |
| 111 | [(iPr2Ph)2DABAn]NiCl2 | 0.0283 | 189 | 60 | 10 | 8700 |
| 112 | [(iPr2Ph)2DABAn]NiBr2 | 0.0483 | 127 | 60 | 22 | 8700 |
| 113 | [(iPr2Ph)2DABMe2]NiBr2 | 0.0363 | 146 | 80 | 14 | 6700 |
| 114^{(a)} | [(Me2Ph)2DABH2]NiCl2 | 0.0233 | 58 | 60 | 15 | 5500 |
| 115 | [(Me2Ph)2DABH2]NiBr2 | 0.0318 | 129 | 80 | 5 | 5200 |
| 116^{(b)} | [(Me2Ph)2DABH2]NiCl2 | 0.0274 | 73 | 60 | 8 | 5100 |
| 117^{(a)} | [(Me2Ph)2DABMe2]NiCl2 | 0.0545 | 26 | 60 | 15 | 4700 |
| 118 | [(iPr2Ph)2DABAn]NiBr2 | 0.0239 | 256 | 80 | 5 | 4600 |
| 119 | [(Me2Ph)2DABH2]NiCl2 | 0.0229 | 146 | 60 | 5 | 3800 |
| 120^{(a)} | [(Me2Ph)2DABH2]NiCl2 | 0.0260 | 52 | 60 | 12 | 2800 |
| 121 | [(Me2Ph)2DABH2]NiBr2 | 0.0345 | 119 | 70 | 4 | 2200 |
| 122 | [(iPr2Ph)2DABAn]NiCl2 | 0.0326 | 164 | 80 | 10 | 2000 |
| 123^{(a)} | [(Me2Ph)2DABH2]NiCl2 | 0.0287 | 47 | 60 | 10 | 1800 |
| 124 | [(iPr2Ph)2DABMe2]NiCl2 | 0.0203 | 224 | 60 | 15 | 1800 |
| 125^{(c)} | [(Me2Ph)2DABH2]NiCl2 | 0.0238 | 28 | 60 | 5 | 1400 |
| 126^{(a)} | [(Me2Ph)2DABH2]NiCl2 | 0.0309 | 43 | 60 | 5 | 900 |

| | | | | | | |
|---|---|---|---|---|---|---|
| (a) 2 mL MAO charged | | | | | | |
| (b) 3 mL MAO charged | | | | | | |
| (c) 1 mL MAO charged | | | | | | |

The data in Table 1 show that diimine nickel halide catalyst systems can effectively polymerize ethylene with low Al:Ni molar ratios, i.e., less that about 300. Catalyst productivities, with these low Al:Ni molar ratios, can still be very high, usually higher than 10,000 grams polymer per gram nickel. Also note that the reactor temperatures are within commercially acceptable ranges, i.e., between 60 and 80°C.

### Example 2

This example shows that high polymer branching can be retained at high reactor pressures and temperatures, as well as low Al:Ni molar ratios. Branching numbers in Table 2 were determined in accordance with IR and ASTM procedures. Again, all of the following polymerizations were carried out as described above, with a reactor pressure of 550 psig ethylene in isobutane slurry. MAO was added in a 10 % wt/wt solution in toluene. 5 ml of MAO was added in each Run, unless stated otherwise. Polymerization catalyst systems and results are listed below in Table 2.

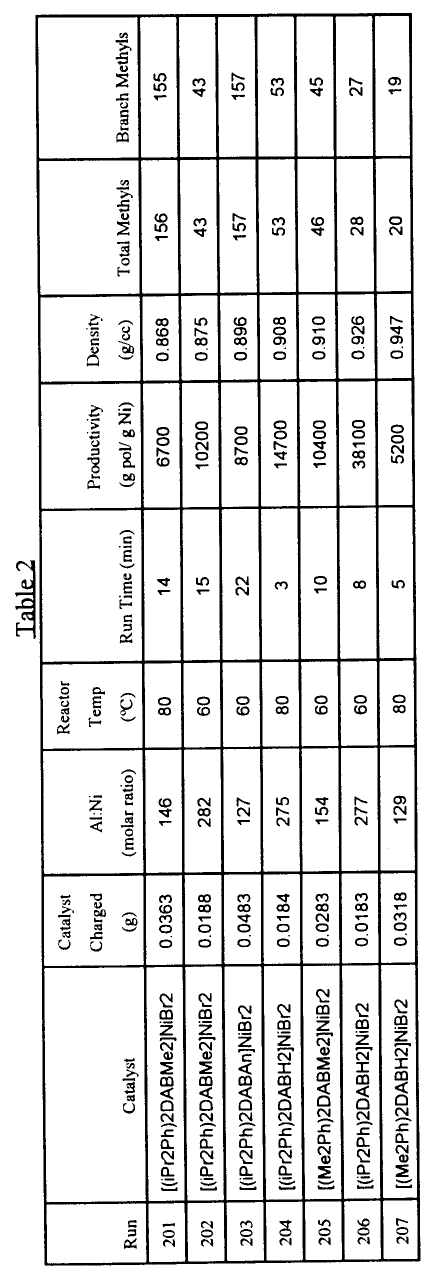

The extent of branching determined by IR and ASTM methods is shown in Table 2. High amounts of branching are evident at all pressures and temperatures.

### Example 3

This example shows that high catalyst system productivity can be maintained at high reactor temperatures and at low levels of MAO, based on the amount of nickel in the catalyst system. This example also teaches that no modification of the MAO, such as the replacement of some of the methyl groups on the MAO with isobutyl groups, is necessary for high productivity at high reactor temperatures. All Runs were performed at 550 psig and at temperatures of 60°C or higher. The results are given in Table 3.

**Table 3**

| Run | Catalyst | Catalyst charged (g) | Al:Ni (molar ratio) | Reactor Temp (°C) | Run Time (min) | Productivity (g pol/g Ni) |
|---|---|---|---|---|---|---|
| 301 | [(iPr2Ph)2DABH2]NiBr2 | 0.0203 | 249 | 80 | 6 | 20600 |
| 302 | [(iPr2Ph)2DABH2]NiBr2 | 0.0184 | 275 | 80 | 3 | 14700 |
| 303 | [(Me2Ph)2DABMe2]NiBr2 | 0.0263 | 165 | 80 | 10 | 9900 |
| 304 | [(iPr2Ph)2DABMe2]NiBr2 | 0.0363 | 146 | 80 | 14 | 6700 |
| 305 | [(Me2Ph)2DABH2]NiBr2 | 0.0318 | 129 | 80 | 5 | 5200 |
| 306 | [(iPr2Ph)2DABAn]NiBr2 | 0.0239 | 256 | 80 | 5 | 4600 |
| 307 | [(iPr2Ph)2DABAn]NiCl2 | 0.0326 | 164 | 80 | 10 | 2000 |
| 308 | [(Me2Ph)2DABH2]NiBr2 | 0.0345 | 119 | 70 | 4 | 2200 |
| 309 | [(iPr2Ph)2DABMe2]NiCl2 | 0.0185 | 246 | 60 | 17 | 52100 |
| 310 | [(iPr2Ph)2DABH2]NiBr2 | 0.0183 | 277 | 60 | 8 | 38100 |
| 311 | [(iPr2Ph)2DABMe2]NiCl2 | 0.0202 | 225 | 60 | 8 | 17100 |
| 312 | [(Me2Ph)2DABMe2]NiCl2 | 0.0328 | 109 | 60 | 5 | 13100 |
| 313 | [(Me2Ph)2DABH2]NiBr2 | 0.0312 | 132 | 60 | 10 | 12600 |
| 314 | [(Me2Ph)2DABMe2]NiBr2 | 0.0283 | 154 | 60 | 10 | 10400 |
| 315 | [(iPr2Ph)2DABMe2]NiBr2 | 0.0188 | 282 | 60 | 15 | 10200 |
| 316 | [(iPr2Ph)2DABAn]NiCl2 | 0.0283 | 189 | 60 | 10 | 8700 |
| 317 | [(iPr2Ph)2DABAn]NiBr2 | 0.0483 | 127 | 60 | 22 | 8700 |
| 318 | [(Me2Ph)2DABH2]NiCl2 | 0.0233 | 58 | 60 | 15 | 5500 |
| 319 | [(Me2Ph)2DABH]NiCl2 | 0.0274 | 73 | 60 | 8 | 5100 |
| 320 | [(Me2Ph)2DABMe2]NiCl2 | 0.0545 | 26 | 60 | 15 | 4700 |
| 321 | [(Me2Ph)2DABH2]NiCl2 | 0.0229 | 146 | 60 | 5 | 3800 |
| 322 | [(Me2Ph)2DABH2]NiCl2 | 0.0238 | 28 | 60 | 5 | 1400 |

The data in Table 3 show that MAO which is not modified can be used as a cocatalyst with diimine nickel halide complexes to effectively polymerize ethylene at commercial conditions using high pressures and temperatures.

### Example 4

This example shows that polymers having a broader molecular weight distribution can be produced with the inventive catalyst systems with the inventive polymerization process. Various catalyst diimine nickel halide catalyst systems were used to polymerize ethylene. All Runs were performed at 550 psig and at temperatures of 80° (Runs 401 - 404) or 60°C (Runs 405 - 416). The amount of MAO in toluene solution added was 5 ml for all Runs, except Run 406, which had 3 ml added, Run 407 which had 1 ml added and Run 408 which had 2 ml added. The results are given in Table 4.

**Table 4**

| Run # | Catalyst | Mass Catalyst Charged (g) | Al:Ni (molar ratio) | Run Time (min) | Productivity (g pol/g Ni) | Mw | Mn | HI (Mw/Mn) |
|---|---|---|---|---|---|---|---|---|
| 401 | [(Me2Ph)2DABH2]NiBr2 | 0.0318 | 129 | 5 | 5200 | 44 | 12 | 3.62 |
| 402 | [(iPr2Ph)2DABH2]NiBr2 | 0.0184 | 275 | 3 | 14700 | 59 | 18 | 3.34 |
| 403 | [(Me2Ph)2DABMe2]NiBr2 | 0.0263 | 165 | 10 | 9900 | 31 | 14 | 2.22 |
| 404 | [(iPr2Ph)2DABMe2]NiBr2 | 0.0363 | 146 | 14 | 6700 | 652 | 255 | 2.56 |
| 405 | [(Me2Ph)2DABH2]NiCl2 | 0.0229 | 146 | 5 | 3800 | 84 | 17 | 4.91 |
| 406 | [(Me2Ph)2DABH2]NiCl2 | 0.0274 | 73 | 8 | 5100 | 73 | 16 | 4.46 |
| 407 | [(Me2Ph)2DABH2]NiCl2 | 0.0238 | 28 | 5 | 1400 | 93 | 15 | 6.40 |
| 408 | [(Me2Ph)2DABMe2]NiCl2 | 0.0545 | 26 | 15 | 4700 | 94 | 33 | 2.82 |
| 409 | [(Me2Ph)2DABMe2]NiCl2 | 0.0328 | 109 | 5 | 13100 | 164 | 53 | 3.10 |
| 410 | [(iPr2Ph)2DABMe2]NiCl2 | 0.0202 | 225 | 8 | 17100 | 1228 | 390 | 3.15 |
| 411 | [(Me2Ph)2DABH2]NiBr2 | 0.0312 | 132 | 10 | 12600 | 86 | 15 | 5.93 |
| 412 | [(iPr2Ph)2DABH2]NiBr2 | 0.0183 | 277 | 8 | 38100 | 101 | 19 | 5.23 |
| 413 | [(Me2Ph)2DABMe2]NiBr2 | 0.0283 | 154 | 10 | 10400 | 110 | 38 | 2.92 |
| 414 | [(iPr2Ph)2DABMe2]NiBr2 | 0.0188 | 282 | 15 | 10200 | 1725 | 632 | 2.73 |
| 415 | [(iPr2Ph)2DABAn]NiCl2 | 0.0283 | 189 | 10 | 8700 | 808 | 220 | 3.68 |
| 416 | [(iPr2Ph)2DABAn]NiBr2 | 0.0483 | 127 | 22 | 8700 | 550 | 143 | 3.86 |

The data in Table 4 show that a relatively broad molecular weight distribution, as evidenced by the heterogeneity index (HI), which is a ratio of M_{w}/Mₙ, can be achieved for a ethylene polymer produced with a diimine nickel halide catalyst system at high reactor temperatures and pressures, as well as low Al:Ni molar ratios.

While this invention has been described in detail for the purpose of illustration, it is not to be construed as limited thereby but is intended to cover all changes and modifications within the spirit and scope thereof.

## Claims

1. A heterogeneous catalyst composition comprising:
a) one or more diimine nickel halide complexes having the formula 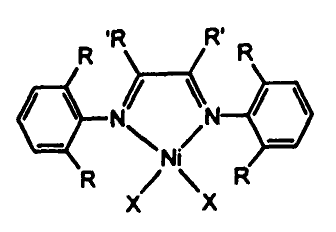
wherein X is a halogen;
R can be the same or different and is selected from branched and/or linear alkyl or aromatic groups having from 1 to 8 carbon atoms per alkyl group; and
R' can be the same or different and is selected from hydrogen and linear, branched, cyclic, bridging, aromatic, and/or aliphatic hydrocarbons, having from 1 to 70 carbon atoms per radical group and
b) methylaluminoxane.

2. The composition of claim 1, wherein said halogen is selected from chlorine, bromine, and mixtures thereof, in particular wherein said halogen is bromine.

3. The composition of claim 1 or 2, wherein said R substituent is selected from branched and/or linear alkyl or aromatic groups having from 1 to 5 carbon atoms per alkyl group, in particular from linear or branched aliphatic groups having from 1 to 5 carbon atoms per group, preferably wherein said R substituent is selected from methyl groups, isopropyl groups, and mixtures thereof.

4. The composition of any of claims 1 to 3, wherein said R' substituent is selected from hydrogen and linear, branched, cyclic, bridging, aromatic, and/or aliphatic hydrocarbons having from 1 to 12 carbon atoms per radical group, preferably from hydrogen and branched, linear, cyclic, aromatic or aliphatic radicals having from 1 to 12 carbon atoms per radical, most preferably from hydrogen, methyl groups, ethyl groups, propyl groups, phenyl groups, acenaphthyl groups, cyclobutadienyl groups or mixtures thereof.

5. The composition of any of the preceding claims, wherein said diimine nickel halide complexes and said methylaluminoxane are present in an amount to have an aluminum to nickel molar ratio of less than 750:1, in particular wherein said aluminum to nickel molar ratio is within a range of 50:1 to 600:1.

6. A polymerization process comprising contacting in a reaction zone under slurry polymerization reactor conditions:
a) ethylene and
b) a heterogenous catalyst composition comprising methylaluminoxane and one or more diimine nickel halide complexes;
wherein a polymer is recovered.

7. The process of claim 6, further comprising that a comonomer selected from alpha-olefins having from 3 to 10 carbon atoms per molecule is present, preferably wherein said comonomer is selected from propylene, 1-butene, 1-pentene, 1-hexene, 1-octene, 4-methyl-1-pentene, and mixtures thereof, most preferably from 1-hexene, 4-methyl-1-pentene, and mixtures thereof.

8. The process of claim 6 or 7, wherein said heterogenous catalyst composition is a composition as defined in any of claims 1 to 5.

9. The process of any of claims 6 to 8, wherein said slurry polymerization reactor conditions comprise a temperature within a range of 10 to 90°C and a pressure within a range of 0.76 to 7.6 MPa (100 to 1000 psia).

10. The process of any of claims 6 to 9, wherein said slurry polymerization reactor conditions comprise a diluent of isobutane.

11. A polymer composition of ethylene comprising from 100 to 200 short chain branches per 10,000 backbone carbon atoms of said polymer and wherein said polymer has a heterogeneity index in the range of 4 to 10.
